# EUROPEAN PATENT SPECIFICATION

(11) **EP 2 615 842 B1**
(45) Date of publication and mention of the grant of the patent: **20.12.2017**
(21) Application number: 11777267.3
(22) Date of filing: 31.05.2011
(51) Int. Cl.: H04N 21/234, H04N 21/81, H04N 21/6437, H04L 29/06

(54) **METHOD AND SYSTEM FOR SPLICING ADVERTISEMENT, SPLICER AND HEAD END DEVICE**
VERFAHREN UND SYSTEM ZUM ZUSAMMENFÜGEN VON WERBUNGEN, ZUSAMMENFÜGER UND EINGANGSEINHEIT
PROCÉDÉ ET SYSTÈME POUR LE COLLAGE D'UNE ANNONCE PUBLICITAIRE, DISPOSITIF DE COLLAGE ET DISPOSITIF CÔTÉ TÊTE DE RÉSEAU

(30) Priority: 21.10.2010 CN 201010526881
(43) Date of publication of application: 17.07.2013
(73) Proprietor: Huawei Technologies Co., Ltd., Longgang District Shenzhen, Guangdong 518129 (CN)
(72) Inventor: XU, Xiangsheng, Guangdong 518129 (CN); YAN, Xiaojun, Guangdong 518129 (CN); ZHANG, Jinhui, Guangdong 518129 (CN); XIA, Hui, Guangdong 518129 (CN)
(74) Representative: Epping - Hermann - Fischer
(86) International application number: PCT/CN2011/074950
(87) International publication number: WO 2011/137848

(56) References cited:
- CN-A- 101 448 138
- CN-A- 101 656 755
- CN-A- 101 860 739
- US-A1- 2009 210 900
- US-A1- 2009 217 318
- US-A1- 2010 251 289
- BRASSIL J ET AL: "Enhancing internet streaming media with cueing protocols", PROCEEDINGS IEEE INFOCOM 2001. CONFERENCE ON COMPUTER COMMUNICATIONS. TWENTIETH ANNUAL JOINT CONFERENCE OF THE IEEE COMPUTER AND COMMUNICATIONS SOCIETY (CAT. NO.01CH37213); [PROCEEDINGS IEEE INFOCOM. THE CONFERENCE ON COMPUTER COMMUNICATIONS], PISCAT, vol. 1, 22 April 2001 (2001-04-22), pages 95-103, XP010538689, DOI: 10.1109/INFCOM.2001.916691 ISBN: 978-0-7803-7016-6
- OTT AALTO UNIVERSITY C PERKINS UNIVERSITY OF GLASGOW J: "Guidelines for Extending the RTP Control Protocol (RTCP); rfc5968.txt", GUIDELINES FOR EXTENDING THE RTP CONTROL PROTOCOL (RTCP); RFC5968.TXT, INTERNET ENGINEERING TASK FORCE, IETF; STANDARD, INTERNET SOCIETY (ISOC) 4, RUE DES FALAISES CH- 1205 GENEVA, SWITZERLAND, 16 September 2010 (2010-09-16), pages 1-17, XP015073006, [retrieved on 2010-09-16]
- SCHULZRINNE COLUMBIA UNIVERSITY S CASNER PACKET DESIGN R FREDERICK BLUE COAT SYSTEMS INC V JACOBSON PACKET DESIGN H: "RTP: A Transport Protocol for Real-Time Applications; rfc3550.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 July 2003 (2003-07-01), XP015009332, ISSN: 0000-0003

## Description

### FIELD OF THE INVENTION

Embodiments of the present invention relate to the field of communication technologies, and in particular, to a method and system for splicing an advertisement, a splicer, and a head end device.

### BACKGROUND OF THE INVENTION

With the development of networks, in the field of the video service providing, wired network operators implement, by using an advertisement insertion technology, region positioning advertisement insertion and precision positioning advertisement to gain economic benefits from advertisers and bring about remarkable economic profits for the advertisers. Currently, the working principles of a system for inserting an advertisement are as follows: A splicer receives video data from a head end and a targeted advertisement from an advertisement server, and inserts the targeted advertisement in an advertisement avail of program streams by using a Digital Program Insertion (Digital Program Insertion, abbreviated as DPI) technology, where the insertion is also called splicing, and forwards the spliced video data to a corresponding set-top box (Set Top Box, abbreviated as STB).

In a broadcast television (Broadcast Television, BTV) scenario, the head end device of the IP television (Internet Protocol Television, abbreviated as IPTV) may send video data in MPEG2-TS over RTP over UDP mode or Codec over RTP mode. Specifically, in MPEG2-TS over RTP over UDP mode, Real-time Transport Protocol (Real-time Transport Protocol, abbreviated as RTP) encapsulation may be performed on MPEG2-TS streams, and encapsulated packets are sent to a network by using User Datagram Protocol (User Datagram Protocol, abbreviated as UDP), where each encapsulated packet has seven MPEG2-TS packets. In Codec over RTP mode, Real-time Transport Protocol (Real-time Transport Protocol, RTP) encapsulation may be performed on coded video data, and encapsulated packets are sent to the network by using UDP, where the video data may be MPEG2 raw data, H264 raw data or MPEG4 raw data.

During the implementation of the present invention, it is found that the prior art has the following problems: When the head end device performs encapsulation processing on video data in RTP mode, the splicer cannot determine when to splice received targeted advertisement into the encapsulated video data, thereby failing to implement advertisement insertion services.

US 2009/217318 A1 relates to a method and system for conditioning a media stream for splicing. Content-specific splice points, which correspond to a possible playout splice point within an original media stream, are identified for both audio and video components of the original media stream. Once the audio bitstream and video bitstream splice points are identified, the audio bitstream in the vicinity of the audio bitstream splice point is packetized into IP packets containing only audio with one of the audio-containing IP packets having an IP packet boundary that corresponds to the audio bitstream splice point and the video bitstream in the vicinity of the video bitstream splice point is packetized into IP packets containing only video with one of the video-containing IP packtets having an IP packet boundary that corresponds to the vido bitstream splice point. The conditioned original media stream is then transmitted downstream to a splicer.

### SUMMARY OF THE INVENTION

The present invention provide a method and system for splicing an advertisement, a splicer, and a head end device to solve the problem in the prior art that when a head end device performs encapsulation processing on video data in RTP mode, the splicer cannot determine when to splice a received targeted advertisement into the encapsulated video data, thereby effectively implementing advertisement insertion services.

An aspect of the present invention provides a method for splicing an advertisement, including:
performing real-time transport protocol encapsulation processing on coded video data, to obtain a real-time transport protocol packet and a real-time transport protocol control protocol packet; and
carrying splice information in the obtained real-time transport protocol control protocol packet, and sending the real-time transport protocol control protocol packet to a splicer, so that the splicer splices a received targeted advertisement into an advertisement avail of the video data according to the splice information in the received the Real-time Transport Protocol Control Protocol packet;
wherein a subtype of the real-time transport protocol control protocol packet indicates that the real-time transport protocol control protocol packet carries the splice information.

Another aspect of the present invention also provides a method for splicing an advertisement, including:
receiving a real-time transport protocol control protocol packet that carries splice information; and
splicing a received targeted advertisement into an advertisement avail of video data according to the splice information in the real-time transport protocol control protocol packet;
wherein a subtype of the real-time transport protocol control protocol packet indicates that the real-time transport protocol control protocol packet carries the splice information.

Another aspect of the present invention provides a head end device, including:
an encapsulation processing module, configured to perform real-time transport protocol encapsulation processing on coded video data, to obtain a real-time transport protocol packet and a real-time transport protocol control protocol packet; and
a sending module, configured to carry splice information in the obtained real-time transport protocol control protocol packet, and send the real-time transport protocol control protocol packet to a splicer, so that the splicer splices a received targeted advertisement into an advertisement avail of the video data according to the splice information in the received real-time transport protocol control protocol packet;
wherein a subtype of the real-time transport protocol control protocol packet indicates that the real-time transport protocol control protocol packet carries the splice information.

Another aspect of the present invention provides a splicer, including:
a first receiving module, configured to receive a real-time transport protocol control protocol packet that carries splice information; and
a splicing module, configured to splice a received targeted advertisement into an advertisement avail of video data according to the splice information in the real-time transport protocol control protocol packet;
wherein a subtype of the real-time transport protocol control protocol packet indicates that the real-time transport protocol control protocol packet carries the splice information.

Another aspect of the present invention provides a system for splicing an advertisement, including a head end device and a splicer.

The head end device is configured to: perform real-time transport protocol encapsulation processing on coded video data, to obtain a real-time transport protocol packet and real-time transport protocol control protocol packet; carry splice information in the obtained real-time transport protocol control protocol packet, and send the real-time transport protocol control protocol packet to the splicer, so that the splicer splices a received targeted advertisement into an advertisement avail of the video data according to the splice information in the received real-time transport protocol control protocol packet; and
the splicer is configured to: receive a real-time transport protocol control protocol packet that carries splice information; and splice a received targeted advertisement into an advertisement avail of the video data according to the real-time transport protocol control protocol packet;
wherein a subtype of the real-time transport protocol control protocol packet indicates that the real-time transport protocol control protocol packet carries the splice information.

By using the method and system for splicing an advertisement, the splicer, and the head end device provided in the present invention, RTP encapsulation processing is performed on coded video data, and an RTP packet and an RTCP packet is obtained; splice information is carried in the obtained RTCP packet, and the RTCP packet is sent to a splicer, so that the splicer splices a received targeted advertisement into an advertisement avail of the video data according to the splice information in the received RTCP packet, which solves the problem in the prior art that when a head end device performs encapsulation processing on video data in RTP mode, the splicer cannot determine when to splice a received targeted advertisement into the encapsulated video data, thereby effectively implementing advertisement insertion services.

### BRIEF DESCRIPTION OF THE DRAWINGS

To illustrate technical solutions in embodiments of the present invention or in the prior art more clearly, the following briefly introduces the accompanying drawings required for describing the embodiments or the prior art. Apparently, the accompanying drawings in the following description show merely some embodiments of the present invention, and a person having ordinary skill in the art can still derive other drawings from these accompanying drawings without creative efforts.
FIG. 1 is a schematic structural diagram of a system for splicing an advertisement according to an embodiment of the present invention;
FIG. 2 is a flowchart of an embodiment of a method for splicing an advertisement;
FIG. 3 is a schematic diagram illustrating a format of an RTP packet carrying splice information according to an embodiment of the present invention;
FIG. 4 is a schematic diagram illustrating a format of an RTCP packet carrying splice information according to an embodiment of the present invention;
FIG. 5 is another schematic diagram illustrating a format of an RTP packet carrying splice information according to an embodiment the present invention;
FIG. 6 is another schematic diagram illustrating a format of an RTCP packet carrying splice information according to an embodiment of the present invention;
FIG. 7 is a flowchart of another embodiment of a method for splicing an advertisement;
FIG. 8 is a schematic structural diagram of an embodiment of a head end device;
FIG. 9 is a schematic structural diagram of an embodiment of a splicer; and
FIG. 10 is schematic structural diagram of an embodiment of a system for splicing an advertisement.

### DETAILED DESCRIPTION OF THE EMBODIMENTS

To make objectives, technical solutions, and advantages of embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person having ordinary skill in the art based on the embodiments of the present invention without creative efforts shall fall within the protection scope of the present invention.

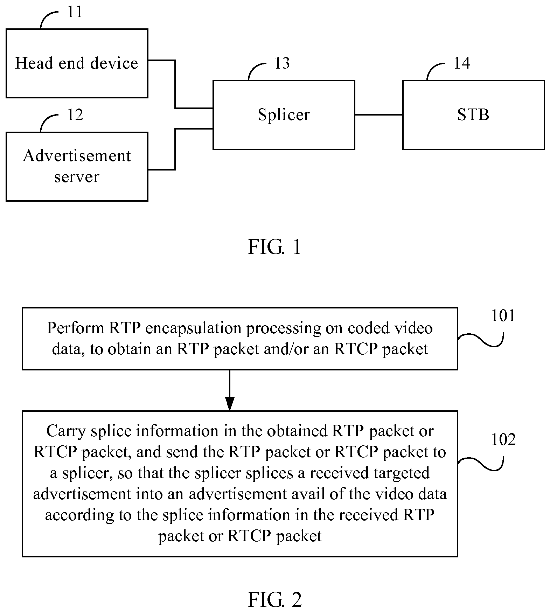

FIG. 1 is a schematic structural diagram of a system for splicing an advertisement according to an embodiment of the present invention. As shown in FIG. 1, the system for splicing an advertisement mainly includes a head end device (head end) 11, an advertisement server (AD server) 12, a splicer 13, and at least one STB 14. Specifically, the head end device 11 acts as a program source and sends video data. The video data may include an advertisement avail (AD Avail), where the AD Avail may be a fixed duration or a time point and is used to play an advertisement or a promotion. In addition, the content in the AD Avail may be changed and replaced with different advertisements of the same duration. The advertisement server 12 is a targeted advertisement provider, which may select different targeted advertisements according to the request of the splicer 13 and advertising strategies and provide the splicer 13 with the targeted advertisements. The splicer 13 receives video data and targeted advertisements, splices the targeted advertisements into the advertisement avail of the video data by using a DPI technology, and forwards the video data after the splicing to the corresponding STB 14. The STB 14 is a terminal device for receiving video data, and is capable of decoding the received video data, and playing the video data on a user display device. The display device may be a television or a liquid crystal display (Liquid Crystal Display, abbreviated as LCD) or the like.

The DPI technology is a digital splicing technology used to splice a specific program into other programs. The splicing process may include splicing a single digital transport stream into a broadcast program, where the digital transport stream may be an advertisement. It should be noted that in applications of BTV, the splicer 13 may splice different advertisements for different advertising areas and different users. For example, the system includes two STBs: a first STB and a second STB, which represent users with different advertising requirements; the advertisement server 12 selects a corresponding targeted advertisement, that is, an targeted advertisement corresponding to the first STB is a first targeted advertisement, and a targeted advertisement corresponding to the second STB is a second targeted advertisement, and sends the first targeted advertisement and the second targeted advertisement to the splicer; the splicer splices each of the first targeted advertisement and the second targeted advertisement into the advertisement avail of the video data by using the DPI technology. Specifically, the video data spliced with the first targeted advertisement is sent to the first STB, and the video data spliced with the second targeted advertisement is sent to the second STB, so that different users can watch their interesting advertisements when watching a same program.

FIG. 2 is a flowchart of an embodiment of a method for splicing an advertisement. As shown in FIG. 2, the method in this embodiment includes:
Step 101: Perform RTP encapsulation processing on coded video data, to obtain an RTP packet and/or an RTCP packet.

In this embodiment, a head end device mainly adopts an MPEG2-TS over RTP over UDP mode or a Codec over RTP mode. For example, when the head end device adopts the Codec over RTP mode, specifically, an encoder in the head end device performs RTP encapsulation on the coded video data, to obtain an RTP packet and/or an RTCP packet. The video data may include MPEG2 raw data, H264 raw data or MPEG4 raw data. A RTP is formulated by an Internet Engineering Task Force (Internet Engineering Task Force, abbreviated as IETF), and is a transport protocol designed for real-time transmission of multimedia data. The RTP is located above a UDP and Transmission Control Protocol (Transmission Control Protocol, abbreviated as TCP), and multicasts or unicasts real-time audio and video data over UDP at a lower layer, thereby implementing multiple-point or single-point transmission of audio and video data. It should be noted that the RTP may not rely on the UDP and may be run over other transport layer protocols (for example, TCP).

The RTP may be formed by two related protocols, namely, RTP and RTCP. The RTP is used to transmit data, and RTCP is used to supervise the quality of service of the transmission and provide related session messages. An RTP packet includes a packet header and data, where the packet header includes parameters such as a sequence number (Sequence Number, abbreviated as SN), a transport stream (Transport Stream, abbreviated as TS), a synchronization source (Synchronization Source, abbreviated as SSRC)/contributing source (Contributing Source, abbreviated as CSRC) list. The SN is a 16-bit numeric value and used to transport RTP data packets in sequence. The SN is plus 1 each time when the head end device sends an RTP data packet, and a splicer may, according to the SN, detect whether packet loss occurs and re-build a packet sequence. It should be noted that the RTP cannot provide a reliable mechanism for transporting data packets in sequence and nor can it provide traffic control or congestion control. Therefore, the RTP relies on the RTCP for providing services of transporting data packets in sequence and traffic control or congestion control.

Step 102: Carry splice information in the obtained RTP packet or RTCP packet, and send the RTP packet or the RTCP packet to a splicer, so that the splicer splices a received targeted advertisement into the advertisement avail of the video data according to the splice information in the received RTP packet or RTCP packet.

In this embodiment, the head end device may carry the splice information in an RTP packet, and then send the RTP packet to the splicer. After receiving the RTP packet, the splicer splices, according to the splice information carried in an RTP extension header of the RTP packet, a targeted advertisement, which is received from a targeting server, into the advertisement avail of the video data, and sends the processed video data to a set top box.

Alternatively, the head end device may carry the splice information in an RTCP packet, and then send the RTCP packet, and the RTP packet after encapsulation to the splicer. After receiving the RTCP packet and the RTP packet, the splicer splices, according to the splice information carried in the RTCP packet, a targeted advertisement, which is received from a targeting server, into the advertisement avail of the video data, and sends the processed video data to a set top box.

In this embodiment, an RTP packet and/or an RTCP packet is obtained after RTP encapsulation processing is performed on coded video data; and splice information is carried in the obtained RTP packet or RTCP packet, and the RTP packet or RTCP packet is sent to a splicer, so that the splicer splices a received targeted advertisement into the advertisement avail of the video data according to the splice information in the received RTP packet or RTCP packet, which solves a problem in the prior art that when a head end device performs encapsulation processing on video data in RTP mode, the splicer cannot determine when to splice a received targeted advertisement into the encapsulated video data, thereby effectively implementing advertisement insertion services.

In another embodiment of a method for splicing an advertisement of the present invention, further, the splice information in step 102 may specifically be a Society of Cable Telecommunications Engineers (Society of Cable Communications Engineers, SCTE) 35.

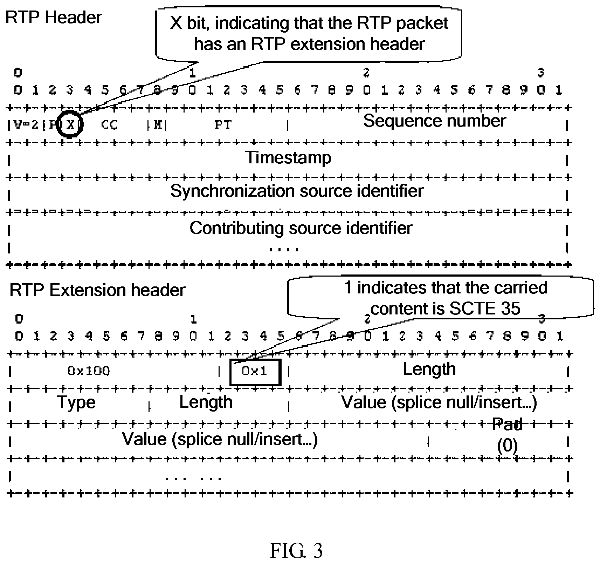

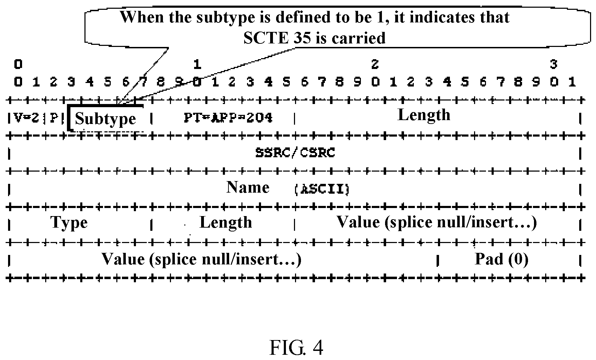

When the splice information is carried in an RTP packet, as shown in FIG. 3, FIG. 3 is a schematic diagram illustrating a format of an RTP packet carrying splice information according to the present invention. Specifically, an X bit is set in the RTP header of an RTP packet, that is, the RTP packet has an RTP extension header; and in the RTP extension header, 0x1 is used to indicate that the RTP extension header carries the SCTE 35. In addition, the RTP header includes version number (V), padding bit (P), extension bit (X), CSRC identifiers (identifiers), CSRC count (CC), mark bit (M), payload type (PT), sequence number (Sequence number), timestamp (Timestamp), and SSRC identifiers (identifiers). The RTP extension header includes length (length), type (type), value (splice null/insert...) (value (splice null/insert...)) and pad (pad), and is used to indicate the content in the SCTE 35. In this embodiment, according to the specification of the Rfc5285, the bit values of the first 12 bits in the extension header of a Two-Byte Header may be 0x100, and the last four bits in the extension header may be used to specify different applications. The 16 bits are called a porfile. It should be noted that the present invention does not limit which bit value of the last four bits in the RTP extension header indicates that the RTP extension header carries the SCTE 35. A person having ordinary skill in the art may randomly select, according to actual needs, any bit value of the last four bits in the RTP extension header to indicate that the RTP extension header carries the SCTE 35; or, when the splice information is carried in an RTCP packet, as shown in FIG. 4, FIG. 4 is a schematic diagram illustrating a format of an RTCP packet carrying splice information according to the present invention. Specifically, a subtype (subtype) in an RTCP packet is set to 1 to indicate that the RTCP packet carries the SCTE 35, where the RTCP packet includes V, P, PT, application-defined RTCP packet (Application Defined RTCP Packet, APP), SSRC/CSRC, name (name), type, value (splice null/insert...), and pad.

In another embodiment of a method for splicing an advertisement, further, the splice information in step 102 may include a splice event information identifier, splice start time information, splice duration information and/or splice mode information. The splice event information identifier is used to identify splice event information, where the splice event information may indicate when to splice a targeted advertisement, for example, a 9 o'clock splice event information identifier is used to identify splice event information indicating that a targeted advertisement is spliced at 9 o'clock; a 10 o'clock splice event information identifier is used to identify splice event information indicating that a targeted advertisement is spliced at 10 o'clock. The splice mode information may include immediate splice mode information, timed splice mode information or canceled splice mode information. Specifically, the immediate splice mode information means that starting from the current time, a received targeted advertisement is immediately spliced into the AD Avail of video data. If no splice duration exists, splicing may be performed according to the duration of the advertisement; timed splice means that a splicer starts the splicing from a specified splice start time point. If no splice duration exists, the splicing is performed according to the duration of the advertisement. The canceled splice mode means that a current splice event is canceled.

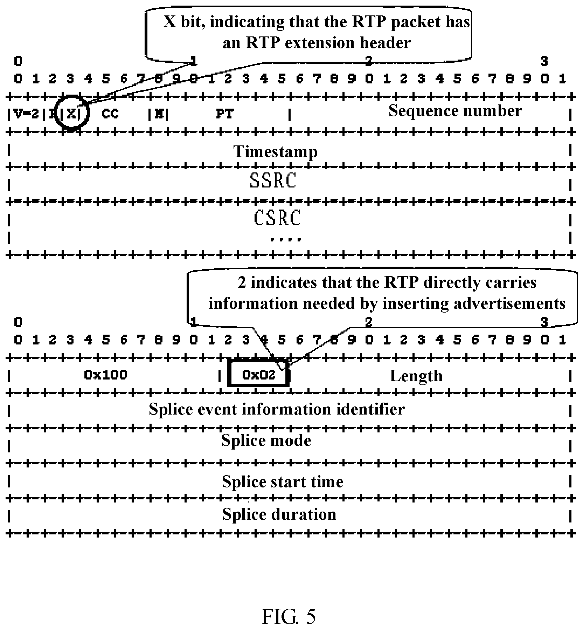

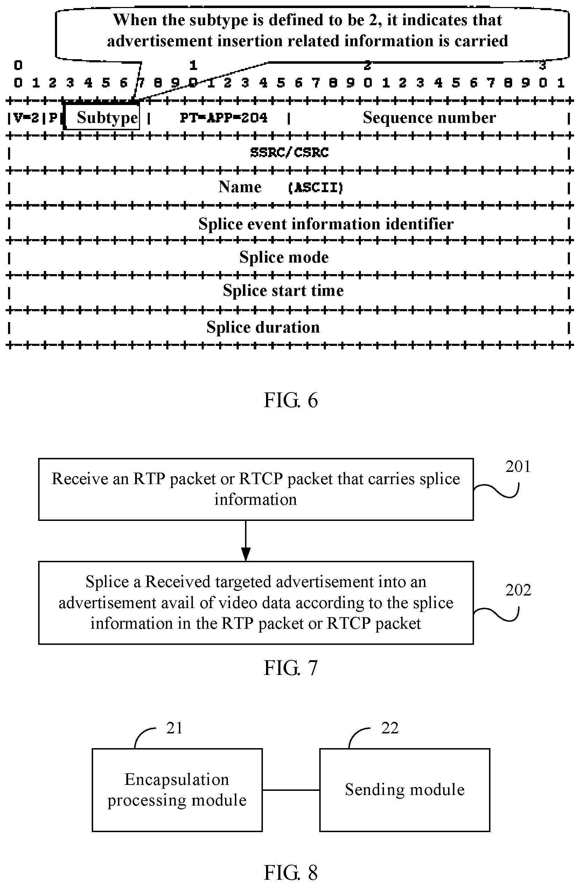

When the splice information is carried in an RTP packet, as shown in FIG. 5, FIG. 5 is another schematic diagram illustrating a format of an RTP packet carrying splice information according to the present invention. Specifically, an X bit is set in the RTP header of an RTP packet, that is, the RTP packet has an RTP extension header; and in the RTP extension header, 0x02 is used to indicate that the RTP extension header carries required splice information. The RTP header includes V, P, M, CSRC identifiers, CC, X, PT, Sequence number, Timestamp, and SSRC identifiers; the RTP extension header includes length, splice event information identifier (splice event id), splice mode (splice mode), splice start time (splice start time), and splice duration (splice duration time). It should be noted that the present invention does not limit which bit value of the last four bits in the RTP extension header indicates that the RTP extension header carries required splice information. A person having ordinary skill in the art may randomly select, according to actual needs, any bit value of the last four bits in the RTP extension header to indicate that the RTP extension header carries required splice information; or, when splice information is carried in an RTCP packet, as shown in FIG. 6, FIG. 6 is another schematic diagram illustrating a format of an RTCP packet carrying splice information according to the present invention. Specifically, a subtype in the RTCP packet is set to 2 to indicate that the RTCP packet carries required splice information, where the RTCP packet includes V, P, PT, APP, SSRC/CSRC, name, splice event id, splice mode, splice start time, and splice duration time. In addition, the required splice information is filled in application related data behind an RTCP APP fixed header (12 bytes).

It should be noted that the content of the splice information is not limited in the embodiment of the present invention and a person having ordinary skill in the art may set the content of the splice information randomly according to actual needs.

FIG. 7 is a flowchart of another embodiment of a method for splicing an advertisement. As shown in FIG. 7, the method in this embodiment includes:
Step 201: Receive an RTP packet or RTCP packet that carries splice information.

In this embodiment, specifically, a head end device may perform encapsulation processing on coded video data by using RTP, carry splice information in an RTP packet, and send the RTP packet to a splicer. Alternatively, a head end device may also perform encapsulation processing on coded video data by using RTP, carry splice information in an RTCP packet, and send the RTCP packet to a splicer and meanwhile send the RTP packet after encapsulation to the splicer.

Step 202: Splice a received targeted advertisement into an advertisement avail of video data according to the splice information in the RTP packet or RTCP packet.

In this embodiment, the splice information may specifically be SCTE 35 information; or the splice information may further include a splice event information identifier, splice start time information, splice duration information and/or splice mode information. The splice mode information may include immediate splice mode information, timed splice mode information or canceled splice mode information. Specifically, the immediate splice mode information means that starting from the current time, a received targeted advertisement is immediately spliced into the AD Avail of the video data. If no splice duration exists, splicing may be performed according to the duration of the advertisement; timed splice means that the splicer starts the splicing from a specified splice start time point. If no splice duration exists, the splicing is performed according to the duration of the advertisement. The canceled splice mode means that a current splice event is canceled.

It should be noted that the content of the splice information is not limited in the embodiment of the present invention and a person having ordinary skill in the art may set the content of the splice information randomly according to actual needs.

In addition, in this embodiment, an advertising server may select different targeted advertisements according to the request of the splicer and advertising strategies, and send the selected targeted advertisements to the splicer. The splicer determines, according to the obtained splicing information, the time when to splice the targeted advertisements, and splices the received targeted advertisements into the video data. It should also be noted that the splicer may identify different users, to splice the received different targeted advertisements according to requirements of the users, and send the video data spliced with different targeted advertisements to different users. Therefore, the method may further include:
receiving and storing a set top box identifier and a targeted advertisement identifier corresponding to the set top box identifier; and
searching for a set top box identifier corresponding to the targeted advertisement identifier of a targeted advertisement, and sending processed video data to a set top box corresponding to the set top box identifier.

The set top box identifier may be an identifier such as an IP address.

In this embodiment, an RTP packet is obtained after RTP encapsulation processing is performed on coded video data; splice information is carried in the RTP packet or an RTCP packet, and the RTP packet or the RTCP packet is sent to a splicer, so that the splicer splices a received targeted advertisement into the advertisement avail of the video data according to the splice information in the received RTP packet or RTCP packet, and sends the processed video data, which solves a problem in the prior art that when encapsulation processing is performed on video data in RTP mode, the splicer cannot determine when to splice a received targeted advertisement into the encapsulated video data, thereby implementing advertisement insertion services. In particular, MPEG2-TS streams and advertisement insertion services where video data is encapsulated in Codec over RTP mode are effectively supported.

FIG. 8 is a schematic structural diagram of an embodiment of a head end device according to the present invention. As shown in FIG. 8, the head end device in this embodiment includes an encapsulation processing module 21 and a sending module 22. The encapsulation processing module 21 is configured to perform RTP encapsulation processing on coded video data, to obtain an RTP packet and/or an RTCP packet; the sending module 22 is configured to carry splice information in the obtained RTP packet or RTCP packet, and send the RTP packet or RTCP packet to a splicer, so that the splicer splices a received targeted advertisement into the advertisement avail of the video data according to the splice information in the received RTP packet or RTCP packet.

The head end device provided in this embodiment may be configured to execute the technical solution of the method embodiment shown in FIG. 2, and the principles of implementation are similar and are not further described.

In this embodiment, an RTP packet and/or an RTCP packet is obtained after RTP encapsulation processing is performed on coded video data; and splice information is carried in the obtained RTP packet or RTCP packet, and the RTP packet or the RTCP packet is sent to a splicer, so that the splicer splices a received targeted advertisement into the advertisement avail of the video data according to the splice information in the received RTP packet or RTCP packet, which solves a problem in the prior art that when encapsulation processing is performed on video data in RTP mode, the splicer cannot determine when to splice a received targeted advertisement into the encapsulated video data, thereby implementing advertisement insertion services.

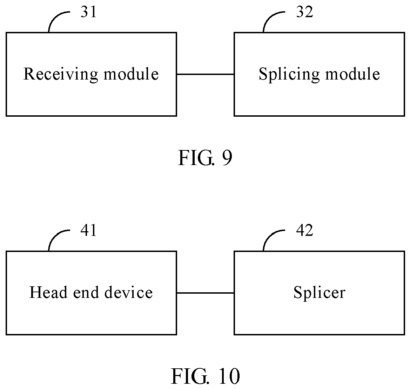

FIG. 9 is a schematic structural diagram of an embodiment of a splicer according to the present invention. As shown in FIG. 9, the splicer provided in this embodiment includes a receiving module 31 and a splicing module 32. The receiving module 31 is configured to receive an RTP packet or RTCP packet that carries splice information; the splicing module 32 is configured to splice a received targeted advertisement into an advertisement avail of video data according to the splice information in the RTP packet or RTCP packet.

The splicer provided in this embodiment may be configured to execute the technical solution of the method embodiment illustrated in FIG. 7, and the principles of implementation are similar and are not further described.

In this embodiment, an RTP packet and/or an RTCP packet is obtained after RTP encapsulation processing is performed on coded video data; and splice information is carried in the obtained RTP packet or RTCP packet, and the RTP packet or RTCP packet is sent to a splicer, so that the splicer splices a received targeted advertisement into the advertisement avail of the video data according to the splice information in the received RTP packet or RTCP packet, and sends the processed video data, which solves the problem in the prior art that when encapsulation processing is performed on video data in RTP mode, the splicer cannot determine when to splice a received targeted advertisement into the encapsulated video data, thereby implementing advertisement insertion services.

In another embodiment of the present invention, to meet users' requirements, the splicer of the present invention further includes a receiving and storing module and a sending module, where the receiving and storing module is configured to receive and store a set top box identifier and a targeted advertisement identifier corresponding to the set top box identifier; and the sending module is configured to search for a set top box identifier corresponding to the targeted advertisement identifier of a targeted advertisement, and send processed video data to a set top box corresponding to the set top box identifier.

FIG. 10 is a schematic structural diagram of an embodiment of a system for splicing an advertisement according to the present invention. As shown in FIG. 10, the system provided in this embodiment includes a head end device 41 and a splicer 42. The head end device 41 may be configured to execute the technical solution of the method embodiment illustrated in FIG. 2, and the principles of implementation are similar and are not further described. The splicer 42 may be configured to execute the technical solution of the method embodiment illustrated in FIG. 7, and the principles of implementation are similar and are not further described.

In this embodiment, a head end device performs RTP encapsulation processing on coded video data to obtain an RTP packet and/or an RTCP packet, carries splice information in the obtained RTP packet or RTCP packet, and sends the RTP packet or the RTCP packet to a splicer, so that the splicer splices a received targeted advertisement into the advertisement avail of the video data according to the splice information in the received RTP packet or RTCP packet, and sends the processed video data, which solves the problem in the prior art that when encapsulation processing is performed on video data in RTP mode, the splicer cannot determine when to splice a received targeted advertisement into the encapsulated video data, thereby implementing advertisement insertion services.

A person having ordinary skill in the art may understand that all or part of the steps of the methods in the embodiments may be implemented by a program instructing relevant hardware. The program may be stored in a computer readable storage medium. When the program is run, the above steps of the methods in the embodiments are performed. The storage medium may be any medium capable of storing program codes, such as a ROM, a RAM, a magnetic disk, or an optical disk, and the like.

## Claims

1. A method for splicing an advertisement, comprising:
performing real-time transport protocol, RTP, encapsulation processing on coded video data, to obtain a RTP packet and a real-time transport protocol control protocol, RTCP, packet (101); **characterized in that**,
carrying splice information in the obtained RTCP packet, and sending the RTCP packet to a splicer, so that the splicer splices a received targeted advertisement into an advertisement avail of the video data according to the splice information in the received RTCP packet (102);
wherein a subtype of the RTCP packet indicates that the RTCP packet carries the splice information.

2. The method for splicing an advertisement according to claim 1, wherein the splice information is SCTE 35.

3. The method for splicing an advertisement according to claim 1, wherein the splice information comprises a splice event information identifier, splice start time information, splice duration information and/or splice mode information, wherein the splice mode information comprises immediate splice mode information, timed splice mode information or cancelled splice mode information.

4. A method for splicing an advertisement, **characterized by**: receiving a real-time transport protocol control protocol, RTCP, packet that carries splice information (201); and
splicing a received targeted advertisement into an advertisement avail of video data according to the splice information in the RTCP packet (202);
wherein a subtype of the RTCP packet indicates that the RTCP packet carries the splice information.

5. The method for splicing an advertisement according to claim 4, wherein the splice information comprises SCTE 35.

6. The method for splicing an advertisement according to claim 4, wherein the splice information comprises a splice event information identifier, splice start time information, splice duration information and splice mode information, wherein the splice mode information comprises immediate splice mode information, timed splice mode information or cancelled splice mode information.

7. The method for splicing an advertisement according to claim 5 or 6, further comprising receiving and storing a set top box identifier and a targeted advertisement identifier corresponding to the set top box identifier; and
searching for a set top box identifier corresponding to a targeted advertisement identifier of the targeted advertisement, and sending processed video data to a set top box corresponding to the set top box identifier.

8. A head end device, comprising:
an encapsulation processing module (21), configured to perform real-time transport protocol, RTP, encapsulation processing on coded video data, to obtain a RTP packet and a real-time transport protocol control protocol, RTCP, packet; **characterized by**
a sending module (22), configured to carry splice information in the obtained RTCP packet, and send the RTCP packet to a splicer, so that the splicer splices a received targeted advertisement into an advertisement avail of the video data according to the splice information in the received RTCP packet;
wherein a subtype of the RTCP packet indicates that the RTCP packet carries the splice information.

9. A splicer, **characterized by**: a receiving module (31), configured to receive a real-time transport protocol control protocol, RTCP, packet that carries splice information; and
a splicing module (32), configured to splice a received targeted advertisement into an advertisement avail of video data according to the splice information in the RTCP packet;
wherein a subtype of the RTCP packet indicates that the RTCP packet carries the splice information.

10. The splicer according to claim 9, further comprising:
a receiving and storing module, configured to receive and store a set top box identifier and a targeted advertisement identifier corresponding to the set top box identifier; and
a sending module, configured to search for a set top box identifier corresponding to a targeted advertisement identifier of the targeted advertisement, and send processed video data to a set top box corresponding to the set top box identifier.

11. A system for splicing an advertisement, comprising a head end device (41) and a splicer (42), wherein:
the head end device (41) is configured to: perform real-time transport protocol, RTP, encapsulation processing on coded video, to obtain a RTP packet and a real-time transport protocol control protocol, RTCP, packet; and carry splice information in the obtained RTCP packet, and send the RTCP packet to the splicer, so that the splicer splices a received targeted advertisement into an advertisement avail of video data according to the splice information in the received RTCP packet; and
the splicer (42) is configured to: receive the RTCP packet that carries the splice information; and splice the received targeted advertisement into the advertisement avail of the video data according to the splice information in the RTCP packet;
wherein a subtype of the RTCP packet indicates that the RTCP packet carries the splice information.

## Patentansprüche

1. Verfahren zum Einfügen einer Werbung, umfassend:
Durchführen einer "Real-Time Transport Protocol"-Einkapselungsverarbeitung an codierten Videodaten, um ein "Real-Time Transport Protocol"-Paket und ein "Real-Time Transport Control Protocol"-Paket, Real-Time TCP-Paket (101) zu erhalten, **gekennzeichnet durch**
Führen von Einfügeinformationen im erhaltenen "Real-Time TCP"-Paket und Senden des "Real-Time TCP"-Pakets zu einem Einfüger, so dass der Einfüger eine empfangene gezielte Werbung in ein verfügbares Werbezeitfenster der Videodaten gemäß den Einfügeinformationen im empfangenen "Real-Time TCP"-Paket (102) einfügt;
wobei ein Subtyp des "Real-Time TCP"-Pakets angibt, dass das "Real-Time TCP"-Paket die Einfügeinformationen führt.

2. Verfahren zum Einfügen einer Werbung nach Anspruch 1, wobei die Einfügeinformationen SCTE 35 sind.

3. Verfahren zum Einfügen einer Werbung nach Anspruch 1, wobei die Einfügeinformationen eine Einfügeereignis-Informationskennung, Einfügestartzeit-Informationen, Einfügezeitraum-Informationen und/oder Einfügemodus-Informationen umfassen, wobei die Einfügemodus-Informationen Sofortiger-Einfügemodus-Informationen, Getimter-Einfügemodus-Informationen oder Abgebrochener-Einfügemodus-Informationen umfassen.

4. Verfahren zum Einfügen einer Werbung, **gekennzeichnet durch**:
Empfangen eines "Real-Time TCP"-Pakets, das Einfügeinformationen führt (201); und
Einfügen einer empfangenen gezielten Werbung in ein verfügbares Werbezeitfenster von Videodaten gemäß den Einfügeinformationen im "Real-Time TCP"-Paket (202);
wobei ein Subtyp des "Real-Time TCP"-Pakets angibt, dass das "Real-Time TCP"-Paket die Einfügeinformationen führt.

5. Verfahren zum Einfügen einer Werbung nach Anspruch 4, wobei die Einfügeinformationen SCTE 35 umfassen.

6. Verfahren zum Einfügen einer Werbung nach Anspruch 4, wobei die Einfugeinformationen eine Einfügeereignis-Informationskennung, Einfügestartzeit-Informationen, Einfügezeitraum-Informationen und Einfügemodus-Informationen umfassen, wobei die Einfügemodus-Informationen Sofortiger-Einfügemodus-Informationen, Getimter-Einfügemodus-Informationen oder Abgebrochener-Einfügemodus-Informationen umfassen.

7. Verfahren zum Einfügen einer Werbung nach Anspruch 5 oder 6, das ferner Empfangen und Speichern einer Set-Top-Box-Kennung und einer Gezielte-Werbung-Kennung, die der Set-Top-Box-Kennung entspricht, umfasst; und
Suchen nach einer Set-Top-Box-Kennung, die einer Gezielte-Werbung-Kennung der gezielten Werbung entspricht, und Senden von verarbeiteten Videodaten zu einer Set-Top-Box, die der Set-Top-Box-Kennung entspricht.

8. Eingangseinheit, umfassend:
ein Einkapselungsverarbeitungsmodul (21), das dazu konfiguriert ist, eine "Real-Time Transport Protocol"-Einkapselungsverarbeitung an codierten Videodaten durchzuführen, um ein "Real-Time Transport Protocol"-Paket und ein "Real-Time TCP"-Paket zu erhalten; **gekennzeichnet durch**
ein Sendemodul (22), das dazu konfiguriert ist, Einfügeinformationen im erhaltenen "Real-Time TCP"-Paket zu führen und das "Real-Time TCP"-Paket zu einem Einfüger zu senden, so dass der Einfüger eine empfangene gezielte Werbung in ein verfügbares Werbezeitfenster der Videodaten gemäß den Einfügeinformationen im empfangenen "Real-Time TCP"-Paket einfügt;
wobei ein Subtyp des "Real-Time TCP"-Pakets angibt, dass das "Real-Time TCP"-Paket die Einfügeinformationen führt.

9. Einfüger, **gekennzeichnet durch**:
ein Empfangsmodul (31), das dazu konfiguriert ist, ein "Real-Time TCP"-Paket, das Einfügeinformationen führt, zu empfangen; und
ein Einfügemodul (32), das dazu konfiguriert ist, eine empfangene gezielte Werbung in ein verfügbares Werbezeitfenster von Videodaten gemäß den Einfügeinformationen im "Real-Time TCP"-Paket einzufügen;
wobei ein Subtyp des "Real-Time TCP"-Pakets angibt, dass das "Real-Time TCP"-Paket die Einfügeinformationen führt.

10. Einfüger nach Anspruch 9, ferner umfassend:
ein Empfangs- und Speichermodul, das dazu konfiguriert ist, eine Set-Top-Box-Kennung und eine Gezielte-Werbung-Kennung, die der Set-Top-Box-Kennung entspricht, zu empfangen und zu speichern; und
ein Sendemodul, das dazu konfiguriert ist, nach einer Set-Top-Box-Kennung, die einer Gezielte-Werbung-Kennung der gezielten Werbung entspricht, zu suchen und verarbeitete Videodaten zu einer Set-Top-Box, die der Set-Top-Box-Kennung entspricht, zu senden.

11. System zum Einfügen einer Werbung, das eine Eingangseinheit (41) und einen Einfüger (42) umfasst, wobei:
die Eingangseinheit (41) dazu konfiguriert ist, eine "Real-Time Transport Protocol"-Einkapselungsverarbeitung an codierten Videodaten durchzuführen, um ein "Real-Time Transport Protocol"-Paket und ein "Real-Time TCP"-Paket zu erhalten; und
Einfugeinformationen im erhaltenen "Real-Time TCP"-Paket zu führen und das "Real-Time TCP"-Paket zum Einfüger zu senden, so dass der Einfüger eine empfangene gezielte Werbung in ein verfügbares Werbezeitfenster von Videodaten gemäß den Einfügeinformationen im empfangenen "Real-Time TCP"-Paket einfügt; und
der Einfüger (42) dazu konfiguriert ist, das "Real-Time TCP"-Paket, das die Einfugeinformationen führt, zu empfangen; und die empfangene gezielte Werbung in das verfügbare Werbezeitfenster der Videodaten gemäß den Einfügeinformationen im "Real-Time TCP"-Paket einzufügen;
wobei ein Subtyp des "Real-Time TCP"-Pakets angibt, dass das "Real-Time TCP"-Paket die Einfügeinformationen führt.

## Revendications

1. Procédé de collage d'une annonce publicitaire, comprenant :
l'exécution d'un traitement d'encapsulation selon le protocole de transport en temps réel sur des données vidéo codées, afin d'obtenir un paquet de protocole de transport en temps réel et un paquet de protocole de commande de transport, TCP, en temps réel (101) ; **caractérisé par**,
l'inclusion d'informations de collage dans le paquet de TCP en temps réel obtenu, et
l'envoi du paquet de TCP en temps réel à un dispositif de collage, de telle sorte que le dispositif de collage colle une annonce publicitaire ciblée reçue dans un temps d'annonce publicitaire disponible des données vidéo conformément aux informations de collage dans le paquet de TCP en temps réel reçu (102) ;
dans lequel un sous-type du paquet de TCP en temps réel indique que le paquet de TCP en temps réel inclut les informations de collage.

2. Procédé de collage d'une annonce publicitaire selon la revendication 1, dans lequel les informations de collage sont SCTE 35.

3. Procédé de collage d'une annonce publicitaire selon la revendication 1, dans lequel les informations de collage comprennent un identifiant d'informations d'événement de collage, une information de temps de début de collage, une information de durée de collage et/ou une information de mode de collage, dans lequel l'information de mode de collage comprend une information de mode de collage immédiat, une information de mode de collage temporisé ou une information de mode de collage supprimé.

4. Procédé de collage d'une annonce publicitaire **caractérisé par** : la réception d'un paquet de TCP en temps réel qui inclut des informations de collage (201) ; et
le collage d'une annonce publicitaire ciblée reçue dans un temps d'annonce publicitaire disponible des données vidéo conformément aux informations de collage dans le paquet de TCP en temps réel (202) ;
dans lequel un sous-type du paquet de TCP en temps réel indique que le paquet de TCP en temps réel inclut les informations de collage.

5. Procédé de collage d'une annonce publicitaire selon la revendication 4, dans lequel les informations de collage comprennent SCTE 35.

6. Procédé de collage d'une annonce publicitaire selon la revendication 4, dans lequel les informations de collage comprennent un identifiant d'information d'événement de collage, une information de temps de début de collage, une information de durée de collage et une information de mode de collage, dans lequel l'information de mode de collage comprend une information de mode de collage immédiat, une information de mode de collage temporisé ou une information de mode de collage supprimé.

7. Procédé de collage d'une annonce publicitaire selon la revendication 5 ou 6, comprenant en outre la réception et la mémorisation d'un identifiant de décodeur et d'un identifiant d'annonce publicitaire ciblée correspondant à l'identifiant de décodeur; et
la recherche d'un identifiant de décodeur correspondant à un identifiant d'annonce publicitaire ciblée de l'annonce publicitaire ciblée, et l'envoi de données vidéo traitées à un décodeur correspondant à l'identifiant de décodeur.

8. Dispositif côté tête de réseau, comprenant :
un module de traitement d'encapsulation (21), configuré pour exécuter un traitement d'encapsulation selon le protocole de transport en temps réel sur des données vidéo codées, afin d'obtenir un paquet de protocole de transport en temps réel et un paquet de TCP en temps réel ; **caractérisé par**,
un module d'envoi (22), configuré pour inclure des informations de collage dans le paquet de TCP en temps réel obtenu, et envoyer le paquet de TCP en temps réel à un dispositif de collage, de telle sorte que le dispositif de collage colle une annonce publicitaire ciblée reçue dans un temps d'annonce publicitaire disponible des données vidéo conformément aux informations de collage dans le paquet de TCP en temps réel reçu ;
dans lequel un sous-type du paquet de TCP en temps réel indique que le paquet de TCP en temps réel inclut les informations de collage.

9. Dispositif de collage, **caractérisé par** : un module de réception (31), configuré pour recevoir un paquet de TCP en temps réel qui inclut des informations de collage ; et
un module de collage (32), configuré pour coller une annonce publicitaire ciblée reçue dans un temps d'annonce publicitaire disponible des données vidéo conformément aux informations de collage dans le paquet de TCP en temps réel ;
dans lequel un sous-type du paquet de TCP en temps réel indique que le paquet de TCP en temps réel inclut les informations de collage.

10. Dispositif de collage selon la revendication 9, comprenant en outre :
un module de réception et de mémorisation, configuré pour recevoir et mémoriser un identifiant de décodeur et un identifiant d'annonce publicitaire ciblée correspondant à l'identifiant de décodeur ; et
un module d'envoi, configuré pour rechercher un identifiant de décodeur correspondant à un identifiant d'annonce publicitaire ciblée de l'annonce publicitaire ciblée, et
envoyer les données vidéo traitées à un décodeur correspondant à l'identifiant de décodeur.

11. Système de collage d'une annonce publicitaire, comprenant un dispositif côté tête de réseau (41) et un dispositif de collage (42), dans lequel :
le dispositif côté tête de réseau (41), est configuré pour exécuter un traitement d'encapsulation selon le protocole de transport en temps réel sur des données vidéo codées, afin d'obtenir un paquet de protocole de transport en temps réel et un paquet de TCP en temps réel ; et inclure des informations de collage dans le paquet de TCP en temps réel obtenu, et envoyer le paquet de TCP en temps réel à un dispositif de collage, de telle sorte que le dispositif de collage colle une annonce publicitaire ciblée reçue dans un temps d'annonce publicitaire disponible des données vidéo conformément aux informations de collage dans le paquet de TCP en temps réel reçu; et
le dispositif de collage (42) est configuré pour : recevoir le paquet de TCP en temps réel qui inclut des informations de collage ; et coller l'annonce publicitaire ciblée reçue dans le temps d'annonce publicitaire disponible des données vidéo conformément aux informations de collage dans le paquet de TCP en temps réel ;
dans lequel un sous-type du paquet de TCP en temps réel indique que le paquet de TCP en temps réel inclut les informations de collage.
